(19) Europäisches Patentamt
European Patent Office
Office européen des brevets

(11) **EP 4 206 281 B1**

(12) **EUROPEAN PATENT SPECIFICATION**

(45) Date of publication and mention
of the grant of the patent:
**08.10.2025 Bulletin 2025/41**

(21) Application number: **21861936.9**

(22) Date of filing: **10.08.2021**

(51) International Patent Classification (IPC):
*C08L 55/02* (2006.01)  *C08L 51/04* (2006.01)
*C08L 25/12* (2006.01)  *C08L 67/02* (2006.01)
*C08K 5/00* (2006.01)  *C08K 5/529* (2006.01)
*C08K 3/22* (2006.01)  *C08K 3/34* (2006.01)

(52) Cooperative Patent Classification (CPC):
(C-Sets available)
**C08L 25/12;** C08K 3/016; C08K 5/0066;
C08K 2003/2296; C08K 2201/003; C08K 2201/006
(Cont.)

(86) International application number:
**PCT/KR2021/010532**

(87) International publication number:
**WO 2022/045639 (03.03.2022 Gazette 2022/09)**

(54) **THERMOPLASTIC RESIN COMPOSITION AND MOLDED ARTICLE FORMED THEREFROM**

THERMOPLASTISCHE HARZZUSAMMENSETZUNG UND DARAUS GEFORMTER FORMKÖRPER

COMPOSITION DE RÉSINE THERMOPLASTIQUE ET ARTICLE MOULÉ FORMÉ À PARTIR DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2020 KR 20200110506**

(43) Date of publication of application:
**05.07.2023 Bulletin 2023/27**

(73) Proprietor: **Lotte Chemical Corporation**
**Seoul, 05551 (KR)**

(72) Inventors:
• **LEE, Jin Seong**
**Uiwang-Si Gyeonggi-do 16073 (KR)**
• **LEE, Beom Hee**
**Uiwang-Si Gyeonggi-do 16073 (KR)**
• **KANG, Jae Ryeon**
**Uiwang-Si Gyeonggi-do 16073 (KR)**
• **KWON, Young Chul**
**Uiwang-Si Gyeonggi-do 16073 (KR)**
• **OH, Hyun Ji**
**Uiwang-Si Gyeonggi-do 16073 (KR)**
• **JEONG, Hyun Taek**
**Uiwang-Si Gyeonggi-do 16073 (KR)**

(74) Representative: **Germain Maureau**
**12, rue Boileau**
**69006 Lyon (FR)**

(56) References cited:
JP-A- 2014 506 955  JP-A- 2017 008 221
JP-A- 2017 031 351  KR-A- 20200 082 276
KR-B1- 101 994 558

(52) Cooperative Patent Classification (CPC): (Cont.)

C-Sets
**C08L 25/12, C08L 51/04, C08L 67/02,
C08K 5/5205, C08K 3/22, C08K 3/34;
C08L 55/02, C08L 25/12, C08L 67/02,
C08K 5/5205, C08K 3/22, C08K 3/34**

**Description**

[Technical Field]

The present invention relates to a thermoplastic resin composition and a molded article formed therefrom. More particularly, the present invention relates to a thermoplastic resin composition that exhibits good properties in terms of flame retardancy, impact resistance, and a molded article formed therefrom.

[Background Art]

An aromatic vinyl resin (rubber-modified aromatic vinyl copolymer resin), such as an acrylonitrile-butadiene-styrene copolymer resin (ABS resin), has good properties in terms of mechanical properties, processability, to be advantageously applied to various fields. However, the aromatic vinyl resin does not exhibit flame resistance and has a problem in that the aromatic vinyl resin per se decomposes, providing raw materials to expand and sustain combustion upon ignition of a flame by an external ignition factor.

As a method for imparting flame retardancy, there is an addition type flame retardation method in which a flame retardant and flame retardant aids are added. Typically, flame retardation can be achieved by adding a flame retardant containing an inactive element, such as halogen or phosphorus. However, use of halogen-based flame retardants is gradually restricted due to emission of harmful gases and environmental issues.

However, when a phosphorus flame retardant is applied as a non-halogen based flame retardant to the aromatic vinyl resin, there is a problem of significant deterioration in flame retardancy to a level of V-2, which is much lower than flame retardancy of halogen-based additives. Further, when a phosphorus-nitrogen based flame retardant is applied to the aromatic vinyl resin, there is difficulty in application to actual products due to significant deterioration in impact resistance.

Therefore, there is a need for development of a thermoplastic resin composition that exhibits good properties in terms of flame retardancy, impact resistance, even when a non-halogen based flame retardant is applied to an aromatic vinyl resin composition.

The background technique of the present invention is disclosed in Korean Patent Laid-open Publication No. 10-2010-0068954. KR20200082276A discloses a thermoplastic resin composition comprising: about 100 parts by weight of a thermoplastic resin comprising about 30 to about 60 wt% of a rubber-modified aromatic vinyl-based copolymer resin, about 30 to about 60 wt% of a polycarbonate resin, and about 5 to about 25 wt% of a polyester resin; about 0.1 to about 5 parts by weight of zinc oxide; about 0.1 to about 3 parts by weight of a phosphite compound; and about 5 to about 30 parts by weight of a phosphorus-based flame retardant.

[Disclosure]

[Technical Problem]

It is one object of the present invention to provide a thermoplastic resin composition having good flame retardancy, impact resistance.

It is another object of the present invention to provide a molded article produced from the thermoplastic resin composition.

The above and other objects of the present invention can be achieved by the present invention described below.

[Technical Solution]

1. One aspect of the present invention relates to a thermoplastic resin composition. The thermoplastic resin composition comprises: about 100 parts by weight of a rubber-modified aromatic vinyl copolymer resin; about 7 parts by weight to about 38 parts by weight of a polyester resin; about 37 parts by weight to about 78 parts by weight of a flame retardant mixture; and about 0.7 parts by weight to about 4.5 parts by weight of zeolite, wherein the flame retardant mixture comprises about 45 wt% to about 60 wt% of piperazine pyrophosphate, about 3 wt% to about 10 wt% of melamine phosphate, about 25 wt% to about 40 wt% of melamine pyrophosphate, and about 2 wt% to about 7 wt% of zinc oxide having an average particle diameter of about 0.2 $\mu$m to about 3 $\mu$m and a BET specific surface area of about 1 m$^2$/g to about 10 m$^2$/g.

2. In embodiment 1, the rubber-modified aromatic vinyl copolymer resin may comprise a rubber-modified vinyl graft copolymer and an aromatic vinyl copolymer resin.

3. In embodiment 1 or 2, the rubber-modified vinyl graft copolymer may be prepared through graft polymerization of a monomer mixture comprising an aromatic vinyl monomer and a vinyl cyanide monomer to a rubber polymer.

4. In embodiments 1 to 3, the polyester resin may comprise at least one of polyethylene terephthalate (PET), polybutylene terephthalate (PBT), polyethylene naphthalate (PEN), polytrimethylene terephthalate (PTT), and polycyclohexylenedimethylene terephthalate (PCT).

5. In embodiments 1 to 4, the piperazine pyrophosphate and the melamine phosphate may be present in a weight ratio of about 1:0.05 to about 1:0.5.

6. In embodiments 1 to 5, the piperazine pyrophosphate and the melamine pyrophosphate may be present in a weight ratio of about 1:0.4 to about 1:0.9.

7. In embodiments 1 to 6, the piperazine pyrophosphate and the zinc oxide may be present in a weight ratio of about 1:0.015 to about 1:0.16.

8. In embodiments 1 to 7, the thermoplastic resin composition may have a flame retardancy of V-2 or higher, as measured on a 2 mm thick specimen by a UL-94 vertical test method, and a flame retardancy of 5VA, as measured on a 2 mm thick specimen by a UL-94 5V burning test method.

9. In embodiments 1 to 8, the thermoplastic resin composition may have a notched Izod impact strength of about 9 kgf·cm/cm to about 17 kgf·cm/cm, as measured on a 1/8" thick specimen in accordance with ASTM D256.

10. In embodiments 1 to 9, the thermoplastic resin composition may have a dart drop height of about 65 cm to about 130 cm, at which holes are generated on a 3.2 mm thick specimen upon dropping a 2 kg dart onto the specimen in accordance with ball drop test method.

11. Another aspect of the present invention relates to a molded article. The molded article is produced from the thermoplastic resin composition according to any one of embodiments 1 to 10.

[Advantageous Effects]

The present invention provides a thermoplastic resin composition having good properties in terms of flame retardancy, impact resistance, and a molded article formed therefrom.

[Best Mode]

Hereinafter, embodiments of the present invention will be described in detail.

A thermoplastic resin composition according to the present invention comprises: (A) a rubber-modified aromatic vinyl copolymer resin (B) a polyester resin; (C) a flame retardant mixture; and (D) zeolite.

As used herein to represent a specific numerical range, the expression "a to b" means "$\geq$ a and $\leq$ b".

(A) Rubber-modified aromatic vinyl copolymer resin

The rubber-modified aromatic vinyl copolymer resin according to one embodiment of the present invention serves to improve mechanical properties, and processability, appearance of the thermoplastic resin composition, and may comprise (A1) a rubber-modified vinyl graft copolymer and (A2) an aromatic vinyl copolymer resin.

(A1) Rubber-modified vinyl graft copolymer

The rubber-modified vinyl graft copolymer according to one embodiment of the present invention may be obtained through graft polymerization of a monomer mixture comprising an aromatic vinyl monomer and a vinyl cyanide monomer to a rubber polymer. For example, the rubber-modified vinyl graft copolymer may be obtained through graft polymerization of the monomer mixture comprising the aromatic vinyl monomer and the vinyl cyanide monomer to the rubber polymer and, optionally, the monomer mixture may further comprise a monomer for imparting processability and heat resistance. Here, polymerization may be performed by any suitable polymerization method known in the art, such as emulsion polymerization, suspension polymerization. Further, the rubber-modified vinyl graft copolymer may have a core (rubber polymer)-shell (copolymer of the monomer mixture) structure, without being limited thereto.

In some embodiments, the rubber polymer may comprise diene rubbers, such as polybutadiene, poly(styrene-butadiene), and poly(acrylonitrile-butadiene), saturated rubbers obtained by adding hydrogen to the diene rubbers, isoprene rubbers, $C_2$ to $C_{10}$ alkyl (meth)acrylate rubbers, copolymers of $C_2$ to $C_{10}$ alkyl (meth)acrylate rubbers and styrene, ethylene-propylene-diene terpolymer (EPDM). These may be used alone or as a mixture thereof. For example, the rubber polymer may comprise diene rubbers, (meth)acrylate rubbers, specifically butadiene rubbers, butyl acrylate rubbers.

In some embodiments, the rubber polymer (rubber particles) may have an average particle diameter of about 0.05 μm to about 6 μm, for example, about 0.15 μm to about 4 μm, specifically about 0.25 μm to about 3.5 μm. Within this range, the thermoplastic resin composition can exhibit good impact resistance and appearance characteristics. Here, the average (z-average) particle diameter of the rubber polymer (rubber particles) may be measured by a light scattering method in a latex state. Specifically, a rubber polymer latex is filtered through a mesh to remove coagulum generated during polymerization of the rubber polymer. Then, a mixed solution of 0.5 g of the latex and 30 ml of distilled water is placed in a 1,000 ml flask, which in turn is filled with distilled water to prepare a specimen. Then, 10 ml of the specimen is transferred to a quartz cell, followed by measurement of the average particle diameter of the rubber polymer using a light scattering particle analyzer (Malvern Co., Ltd., Nano-zs).

In some embodiments, the rubber polymer may be present in an amount of about 20 wt% to about 70 wt%, for example, about 25 wt% to about 60 wt%, based on 100 wt% of the rubber-modified vinyl graft copolymer, and the monomer mixture (comprising the aromatic vinyl monomer and the vinyl cyanide monomer) may be present in an amount of about 30 wt% to about 80 wt%, for example, about 40 wt% to about 75 wt%, based on 100 wt% of the rubber-modified vinyl graft copolymer. Within this range, the thermoplastic resin composition can have good properties in terms of impact resistance, appearance characteristics.

In some embodiments, the aromatic vinyl monomer may be graft copolymerizable with the rubber polymer and may comprise, for example, styrene, $\alpha$-methyl styrene, $\beta$-methyl styrene, p-methyl styrene, p-t-butyl styrene, ethyl styrene, vinyl xylene, monochlorostyrene, dichlorostyrene, dibromostyrene, vinyl naphthalene. These may be used alone or as a mixture thereof. The aromatic vinyl monomer may be present in an amount of about 10 wt% to about 90 wt%, for example, about 40 wt% to about 90 wt%, based on 100 wt% of the monomer mixture. Within this range, the thermoplastic resin composition can have good properties in terms of processability, impact resistance.

In some embodiments, the vinyl cyanide monomer is a monomer copolymerizable with the aromatic vinyl monomer and may comprise, for example, acrylonitrile, methacrylonitrile, ethacrylonitrile, phenyl acrylonitrile, $\alpha$-chloroacrylonitrile, and fumaronitrile, without being limited thereto. These may be used alone or as a mixture thereof. For example, the vinyl cyanide monomer may be acrylonitrile, methacrylonitrile. The vinyl cyanide monomer may be present in an amount of about 10 wt% to about 90 wt%, for example, about 10 wt% to about 60 wt%, based on 100 wt% of the monomer mixture. Within this range, the thermoplastic resin composition can have good properties in terms of chemical resistance, mechanical properties.

In some embodiments, the monomer for imparting processability and heat resistance may comprise, for example, (meth)acrylic acid, maleic anhydride, and N-substituted maleimide, without being limited thereto. The monomer for imparting processability and heat resistance may be present in an amount of about 15 wt% or less, for example, about 0.1 wt% to about 10 wt%, based on 100 wt% of the monomer mixture. Within this range, the monomer for imparting processability and heat resistance can impart processability and heat resistance to the thermoplastic resin composition without deterioration in other properties.

In some embodiments, the rubber-modified vinyl graft copolymer may comprise a copolymer (g-ABS) obtained by grafting a styrene monomer as the aromatic vinyl compound and an acrylonitrile monomer as the vinyl cyanide compound to a butadiene rubber polymer, an acrylate-styrene-acrylonitrile graft copolymer (g-ASA) obtained by grafting a styrene monomer as the aromatic vinyl compound and an acrylonitrile monomer as the vinyl cyanide compound to a butyl acrylate rubber polymer.

In some embodiments, the rubber-modified vinyl graft copolymer (A1) may be present in an amount of about 10 wt% to about 65 wt%, for example, about 20 wt% to about 60 wt%, based on 100 wt% of the rubber-modified aromatic vinyl copolymer resin. Within this range, the thermoplastic resin composition can exhibit good properties in terms of impact resistance, molding processability.

(A2) Aromatic vinyl copolymer resin

The aromatic vinyl copolymer resin according to one embodiment of the present invention may comprise an aromatic vinyl copolymer resin used in typical rubber-modified aromatic vinyl copolymer resins. For example, the aromatic vinyl copolymer resin may be a polymer of a monomer mixture comprising an aromatic vinyl monomer and a vinyl cyanide monomer.

In some embodiments, the aromatic vinyl copolymer resin may be obtained by mixing the aromatic vinyl monomer with the vinyl cyanide monomer, followed by polymerization of the mixture. Here, polymerization may be performed by any suitable polymerization method known in the art, such as emulsion polymerization, suspension polymerization, bulk polymerization.

In some embodiments, the aromatic vinyl monomer may comprise styrene, $\alpha$-methyl styrene, $\beta$-methyl styrene, p-methyl styrene, p-t-butyl styrene, ethyl styrene, vinyl xylene, monochlorostyrene, dichlorostyrene, dibromostyrene, and vinyl naphthalene, without being limited thereto. These may be used alone or as a mixture thereof. The aromatic vinyl monomer may be present in an amount of about 20 wt% to about 90 wt%, for example, about 30 wt% to about 80 wt%, based on 100 wt% of the aromatic vinyl copolymer resin. Within this range, the thermoplastic resin composition can have good properties in terms of impact resistance, fluidity, appearance characteristics.

In some embodiments, the vinyl cyanide monomer may comprise acrylonitrile, methacrylonitrile, ethacrylonitrile, phenyl acrylonitrile, α-chloroacrylonitrile, and fumaronitrile, without being limited thereto. These may be used alone or as a mixture thereof. For example, the vinyl cyanide monomer may comprise acrylonitrile, methacrylonitrile. The vinyl cyanide monomer may be present in an amount of about 10 wt% to about 80 wt%, for example, about 20 wt% to about 70 wt%, based on 100 wt% of the aromatic vinyl copolymer resin. Within this range, the thermoplastic resin composition can have good properties in terms of impact resistance, fluidity, heat resistance, appearance characteristics.

In some embodiments, the aromatic vinyl copolymer resin may further comprise a monomer for imparting processability and heat resistance to the monomer mixture. The monomer for imparting processability and heat resistance may comprise, for example, (meth)acrylic acid and N-substituted maleimide, without being limited thereto. The monomer for imparting processability and heat resistance may be present in an amount of about 15 wt% or less, for example, about 0.1 wt% to about 10 wt%, based on 100 wt% of the monomer mixture. Within this range, the monomer for imparting processability and heat resistance can impart processability and heat resistance to the thermoplastic resin composition without deterioration in other properties.

In some embodiments, the aromatic vinyl copolymer resin may have a weight average molecular weight (Mw) of about 10,000 g/mol to about 300,000 g/mol, for example, about 20,000 g/mol to about 200,000 g/mol, as measured by gel permeation chromatography (GPC). Within this range, the thermoplastic resin composition can have good properties in terms of mechanical strength, molding processability.

In some embodiments, the aromatic vinyl copolymer resin (A2) may be present in an amount of about 35 wt% to about 90 wt%, for example, about 40 wt% to about 80 wt%, based on 100 wt% of the rubber-modified aromatic vinyl copolymer resin (A). Within this range, the thermoplastic resin composition can exhibit good properties in terms of impact resistance, molding processability, appearance characteristics.

(B) Polyester resin

According to one embodiment of the present invention, the polyester resin serves to improve flame retardancy of the thermoplastic resin composition through improvement in self-extinguishability and may be selected from any polyester resins used in a typical thermoplastic resin composition. For example, the polyester resin may be obtained by polycondensation of a dicarboxylic acid component and a diol component, in which the dicarboxylic acid component may comprise: aromatic dicarboxylic acids, such as terephthalic acid (TPA), isophthalic acid (IPA), 1,2-naphthalene dicarboxylic acid, 1,4-naphthalene dicarboxylic acid, 1,5-naphthalene dicarboxylic acid, 1,6-naphthalene dicarboxylic acid, 1,7-naphthalene dicarboxylic acid, 1,8-naphthalene dicarboxylic acid, 2,3-naphthalene dicarboxylic acid, 2,6-naphthalene dicarboxylic acid, 2,7-naphthalenedicarboxylic acid; and aromatic dicarboxylates, such as dimethyl terephthalate (DMT), dimethyl isophthalate, dimethyl-1,2-naphthalate, dimethyl-1,5-naphthalate, dimethyl-1,7-naphthalate, dimethyl-1,8-naphthalate, dimethyl-2,3-naphthalate, dimethyl-2,6-naphthalate, dimethyl-2,7-naphthalate, and in which the diol component may comprise ethylene glycol, 1,2-propylene glycol, 1,3-propylene glycol, 2,2-dimethyl-1,3-propanediol, 1,3-butanediol, 1,4-butanediol, 1,5-pentanediol, 1,6-hexanediol, and a cycloalkylene diol.

In some embodiments, the polyester resin may comprise at least one of polyethylene terephthalate (PET), polybutylene terephthalate (PBT), polyethylene naphthalate (PEN), polytrimethylene terephthalate (PTT), and polycyclohexylenedimethylene terephthalate (PCT).

In some embodiments, the polyester resin may have an inherent viscosity of about 0.5 dl/g to about 1.5 dl/g, for example, about 0.6 dl/g to about 1.3 dl/g, as measured in o-chloro phenol at 25°C. Within this range, the thermoplastic resin composition can exhibit good flame retardancy, mechanical properties.

In some embodiments, the polyester resin may be present in an amount of about 7 parts by weight to about 38 parts by weight, for example, about 10 parts by weight to about 35 parts by weight, relative to about 100 parts by weight of the rubber-modified aromatic vinyl copolymer resin. If the content of the polyester resin is less than about 7 parts by weight relative to about 100 parts by weight of the rubber-modified aromatic vinyl copolymer resin, the resin composition can suffer from deterioration in flame retardancy, and if the content of the polyester resin exceeds about 38 parts by weight, the resin composition can suffer from deterioration in impact resistance, fluidity.

(C) Flame retardant mixture

The flame retardant mixture according to the present invention serves to facilitate formation of char of the thermoplastic resin composition while significantly improving flame retardancy of the thermoplastic resin composition to a level of 5VA together with the rubber-modified aromatic vinyl copolymer resin, the polyester resin and zeolite, and comprises piperazine pyrophosphate, melamine phosphate, melamine, pyrophosphate, and zinc oxide having an average particle diameter of about 0.2 μm to about 3 μm and a BET specific surface area of about 1 m$^2$/g to about 10 m$^2$/g.

In some embodiments, the piperazine pyrophosphate, the melamine phosphate, and the melamine pyrophosphate may be selected from piperazine pyrophosphate, melamine phosphate, and melamine pyrophosphate used in typical flame retardant thermoplastic resin compositions, respectively.

In some embodiments, the zinc oxide serves to improve flame retardancy, impact resistance and extrudability of the thermoplastic resin composition together with the piperazine pyrophosphate, the melamine phosphate and the melamine pyrophosphate, and may have an average particle diameter (D50) of about 0.2 $\mu$m to about 3 $\mu$m, for example, about 0.5 $\mu$m to about 35 $\mu$m, as measured in a single particle state (not forming a secondary particle through agglomeration of particles) using a particle size analyzer (Laser Diffraction Particle Size Analyzer LS I3 320, Beckman Coulter Co., Ltd.). In addition, the zinc oxide may have a BET specific surface area of about 1 m$^2$/g to about 10 m$^2$/g or less, for example, about 1 m$^2$/g to about 7 m$^2$/g, as measured by a nitrogen gas adsorption method using a BET analyzer (Surface Area and Porosity Analyzer ASAP 2020, Micromeritics Co., Ltd.), and a purity of 99% or more. When the zinc oxide has a BET specific surface area and purity outside these ranges, the thermoplastic resin composition can suffer from deterioration in flame retardancy, impact resistance, extrudability.

In some embodiments, the zinc oxide may have various shapes. For example, the zinc oxide may have a shape selected from among a spherical shape, a plate shape, a rod shape, and a combination thereof.

In some embodiments, the zinc oxide may have a peak intensity ratio (B/A) of about 0.01 to about 1.0, for example, about 0.1 to about 1.0, specifically about 0.1 to about 0.5, where A indicates a peak in the wavelength range of 370 nm to 390 nm and B indicates a peak in the wavelength range of 450 nm to 600 nm in measurement of photoluminescence. Within this range, the thermoplastic resin composition can have good flame retardancy, impact resistance.

In some embodiments, the zinc oxide may have a peak position degree ($2\theta$) in the range of about 35° to about 37° and a crystallite size of about 1,000 Å to about 2,000 Å, for example, about 1,200 Å to about 1,800 Å, in X-ray diffraction (XRD) analysis, as calculated by Scherrer's equation (Equation 1) with reference to a measured FWHM value (full width at half maximum of a diffraction peak). Within these ranges, the thermoplastic resin composition can have good flame retardancy, impact resistance.

[Equation 1]

$$\text{Crystallite size (D)} = \frac{K\lambda}{\beta\cos\theta}$$

where K is a shape factor, $\lambda$ is an X-ray wavelength, $\beta$ is an FWHM value (degree), and $\theta$ is a peak position degree.

In some embodiments, the zinc oxide may be prepared by melting metallic zinc in a reactor, heating the molten zinc to about 850°C to about 1,000°C, for example, about 900°C to about 950°C, to vaporize the molten zinc, injecting oxygen gas into the reactor, cooling the reactor to about 20°C to about 30°C, and heating the reactor to about 400°C to about 900°C, for example, 500°C to about 800°C, for about 30 minutes to about 150 minutes, for example, for about 60 minutes to about 120 minutes.

In some embodiments, the flame retardant mixture may comprise about 45 wt% to about 60 wt%, for example, about 48 wt% to about 57 wt%, of the piperazine pyrophosphate; about 3 wt% to about 10 wt%, for example, about 4 wt% to about 9 wt%, of the melamine phosphate; about 25 wt% to about 40 wt%, for example, about 28 wt% to about 37 wt%, of the melamine pyrophosphate; about 2 wt% to about 7 wt%, for example, about 3 wt% to about 6 wt%, of the zinc oxide, based on 100 wt% of the flame retardant mixture.

If the content of the piperazine pyrophosphate is less than about 45 wt% based on 100 wt% of the flame retardant mixture, the thermoplastic resin composition can suffer from deterioration in flame retardancy, and if the content of the piperazine pyrophosphate exceeds about 60 wt%, the thermoplastic resin composition can suffer from deterioration in impact resistance, extrudability.

If the content of the melamine phosphate is less than about 3 wt% based on 100 wt% of the flame retardant mixture, the thermoplastic resin composition can suffer from deterioration in flame retardancy, and if the content of the melamine phosphate exceeds about 10 wt%, the thermoplastic resin composition can suffer from deterioration in impact resistance, extrudability.

If the content of the melamine pyrophosphate is less than about 25 wt% based on 100 wt% of the flame retardant mixture, the thermoplastic resin composition can suffer from deterioration in flame retardancy, and if the content of the melamine pyrophosphate exceeds about 40 wt%, the thermoplastic resin composition can suffer from deterioration in impact resistance, extrudability.

If the content of the zinc oxide is less than about 2 wt% based on 100 wt% of the flame retardant mixture, the thermoplastic resin composition can suffer from deterioration in flame retardancy, and if the content of the zinc oxide exceeds about 7 wt%, the thermoplastic resin composition can suffer from deterioration in flame retardancy, extrudability.

In some embodiments, the piperazine pyrophosphate and the melamine phosphate may be present in a weight ratio of about 1:0.05 to about 1:0.5, for example, about 1:0.08 to about 1:0.3. Within this range, the thermoplastic resin composition can exhibit good flame retardancy, impact resistance.

In some embodiments, the piperazine pyrophosphate and the melamine pyrophosphate may be present in a weight ratio of about 1:0.4 to about 1:0.9, for example, about 1:0.5 to about 1:0.8. Within this range, the thermoplastic resin composition can exhibit good flame retardancy, impact resistance.

In some embodiments, the piperazine pyrophosphate and the zinc oxide may be present in a weight ratio of about 1:0.015 to about 1:0.16, for example, about 1:0.05 to about 1:0.12. Within this range, the thermoplastic resin composition can exhibit good flame retardancy, impact resistance.

In some embodiments, the flame retardant mixture may be present in an amount of about 37 parts by weight to about 78 parts by weight, for example, about 40 parts by weight to about 75 parts by weight, relative to about 100 parts by weight of the rubber-modified aromatic vinyl copolymer resin. If the content of the flame retardant mixture is less than about 37 parts by weight relative to about 100 parts by weight of the rubber-modified aromatic vinyl copolymer resin, the thermoplastic resin composition can suffer from deterioration in flame retardancy, and if the content of the flame retardant mixture exceeds about 78 parts by weight, the thermoplastic resin composition can suffer from deterioration in extrudability, impact resistance.

(D) Zeolite

According to one embodiment, zeolite serves to improve flame retardancy of the thermoplastic resin composition to a level of 5VA together with the rubber-modified aromatic vinyl copolymer resin, the polyester resin and the flame retardant mixture without deterioration in mechanical properties of the thermoplastic resin composition, such as impact resistance.

In some embodiments, zeolite may be porous particles having a pore size of about 0.1 nm to about 0.6 nm, for example, about 0.2 nm to about 0.4 nm, and an average particle diameter of about 0.5 $\mu$m to about 6 $\mu$m, for example, about 1 $\mu$m to about 5 $\mu$m. Within this range, the thermoplastic resin composition can exhibit good properties in terms of flame retardancy, impact resistance, thermal stability. Here, a particle size at 50% of a cumulative value in a particle size distribution of zeolite obtained by laser diffraction scattering is defined as the average particle diameter of zeolite.

In some embodiments, zeolite may be present in an amount of about 0.7 parts by weight to about 4.5 parts by weight, for example, about 1 part by weight to about 4 parts by weight, relative to about 100 parts by weight of the rubber-modified aromatic vinyl copolymer resin. If the content of zeolite is less than about 0.7 parts by weight relative to about 100 parts by weight of the rubber-modified aromatic vinyl copolymer resin, the thermoplastic resin composition can suffer from deterioration in flame retardancy, and if the content of zeolite exceeds about 4.5 parts by weight, the thermoplastic resin composition can suffer from deterioration in impact resistance.

In some embodiments, the flame retardant mixture (C) and the zeolite (D) may be present in a weight ratio (C:D) of about 1:0.013 to about 1:0.1, for example, about 1:0.014 to about 1:0.07. Within this range, the thermoplastic resin composition can exhibit good flame retardancy, impact resistance.

The thermoplastic resin composition according to one embodiment of the invention may further comprise additives used in typical thermoplastic resin compositions. The additives may comprise, for example, impact modifiers, antioxidants, anti-dripping agents, lubricants, release agents, nucleating agents, antistatic agents, stabilizers, pigments, dyes, and mixtures thereof, without being limited thereto. The additives may be present in an amount of about 0.001 parts by weight to about 40 parts by weight, for example, about 0.1 parts by weight to about 10 parts by weight, relative to about 100 parts by weight of the rubber-modified aromatic vinyl copolymer resin.

The thermoplastic resin composition according to one embodiment of the present invention may be prepared in pellet form by mixing the aforementioned components, followed by melt extrusion at a temperature of about 180°C to about 280°C, for example, about 200°C to about 260°C, using a typical twin-screw extruder.

In some embodiments, the thermoplastic resin composition may have a flame retardancy of V-0 or higher, as measured on a 2 mm thick specimen by a UL94 vertical test method.

In some embodiments, the thermoplastic resin composition may have a flame retardancy of 5VA, as measured on a 2 mm thick specimen by a UL94 5V burning test method.

In some embodiments, the thermoplastic resin composition may have a notched Izod impact strength of about 9 kgf·cm/cm to about 17 kgf·cm/cm, for example, about 10 kgf·cm/cm to about 15 kgf cm/cm, as measured on a 1/8" thick specimen in accordance with ASTM D256.

In some embodiments, the thermoplastic resin composition may have a dart drop height of about 65 cm to about 130 cm, for example, about 70 cm to about 110 cm, at which holes are generated on a 3.2 mm thick specimen upon dropping a 2 kg dart onto the specimen in accordance with a ball drop test method.

A molded article according to the present invention is produced from the thermoplastic resin composition set forth above. The thermoplastic resin composition may be prepared in pellet form. The prepared pellets may be produced into various molded articles (products) by various molding methods, such as injection molding, extrusion molding, vacuum molding, and casting. These molding methods are well known to those skilled in the art. The molded article is free from a halogen-based flame retardant to be environmentally friendly and exhibits good properties in terms of flame retardancy, impact resistance, and balance therebetween to be advantageously applied to interior/exterior materials of electric/electronic products.

[Mode for Invention]

Next, the present invention will be described in more detail with reference to some examples. It should be understood that these examples are provided for illustration only and are not to be construed in any way as limiting the invention.

**EXAMPLE**

Details of components used in Examples and Comparative Examples are as follows.

(A) Rubber-modified aromatic vinyl copolymer resin
A mixture of 45 wt% of (A1) a rubber-modified vinyl graft copolymer and 55 wt% of (A2) an aromatic vinyl copolymer resin was used.

(A1) Rubber-modified vinyl graft copolymer
A core-shell type graft copolymer (g-ABS) prepared by graft copolymerization of styrene and acrylonitrile (weight ratio: 75/25) to 55 wt% of butadiene rubber having an average particle diameter of 0.3 $\mu$m was used.
(A2) Aromatic vinyl copolymer resin
A SAN resin (weight average molecular weight: 125,000 g/mol) prepared by polymerization of 78 wt% of styrene and 22 wt% of acrylonitrile was used.

(B) Polyester resin
Polyethylene terephthalate having an inherent viscosity ($\eta$) of 0.9 dl/g, as measured using o-chloro phenol as a solvent at 25°C, was used.
(C) Flame retardant mixture

(C1) Piperazine pyrophosphate (Manufacturer: Hainan Zhongxin Chemical Co., Ltd., Cas No.: 66034-17-1) was used.
(C2) Melamine phosphate (Manufacturer: BASF, Product Name: Melapur®MP) was used.
(C3) Melamine pyrophosphate (Manufacturer: Budenheim Co., Ltd., Product Name: Budit 311MPP) was used.
(C4) Zinc oxide: Metallic zinc was melted in a reactor, followed by heating to 900°C to vaporize the molten zinc, and then oxygen gas was injected into the reactor, followed by cooling to room temperature (25°C) to obtain an intermediate. Then, the intermediate was subjected to heat treatment at 700°C for 90 minutes, followed by cooling to room temperature (25°C), thereby preparing zinc oxide (average particle size: 1.2 $\mu$m, BET specific surface area: 4 m$^2$/g) to be used in the following examples.

(D) Zeolite (Manufacturer: Aekyung Material Co., Ltd., Product Name: APS-30, Average particle size: 2 $\mu$m, pore size: 0.2 nm to 0.4 nm) was used.
(E) Magnesium oxide (MgO, Manufacturer: Sanyo Fine-Tech Korea Co., Ltd., Product Name: Starmag 150) was used.

**Examples 1 to 16 and Comparative Examples 1 to 16**

The above components were mixed in amounts as listed in Tables 1 to 4 and subjected to extrusion at 215°C, thereby preparing pellets. Here, extrusion was performed using a twin-screw extruder (L/D=44, $\Phi$: 45 mm) and the prepared pellets were dried at 80°C for 4 hours or more and injection-molded in a 6 oz. injection molding machine (molding temperature: 220°C, mold temperature: 60°C), thereby preparing specimens. The specimens were evaluated as to the following properties by the following method, and results are shown in Tables 1 to 4.

Property Measurement

(1) Flame retardancy: Flame retardancy was measured on a 2 mm thick specimen by a UL-94 vertical test method and 5VA flame retardancy was measured on a 2 mm thick specimen by a UL-94 5V burning test.
(2) Notched Izod impact strength (kgf·cm/cm): Notched Izod impact strength was measured on a 1/8" thick specimen in accordance with ASTM D256.

(3) Sheet impact strength (unit: cm): A dart drop height, at which holes are generated on a 3.2 mm thick specimen upon dropping a 2 kg dart onto the specimen in accordance with ball drop test method, was measured.

(4) Extrusion processability: The presence of pores in a cross-section (cut surface) of pellets prepared by mixing the components and melt extrusion of the mixture at a temperature of about 200°C to about 230°C using a typical twin-screw extruder. A specimen having 1 or less pores was rated as "non-foamed" and a specimen having 2 or more pores was rated as "foamed".

Table 1

| | Example | | | | | | |
|---|---|---|---|---|---|---|---|
| | 1 | 2 | 3 | 4 | 5 | 6 | 7 |
| (A) (parts by weight) | 100 | 100 | 100 | 100 | 100 | 100 | 100 |
| (B) (parts by weight) | 10 | 25 | 35 | 25 | 25 | 25 | 25 |
| (C) (parts by weight) | 60 | 60 | 60 | 40 | 75 | 60 | 60 |
| (C1) (wt%) | 55 | 55 | 55 | 55 | 55 | 55 | 55 |
| (C2) (wt%) | 6 | 6 | 6 | 6 | 6 | 6 | 6 |
| (C3) (wt%) | 35 | 35 | 35 | 35 | 35 | 35 | 35 |
| (C4) (wt%) | 4 | 4 | 4 | 4 | 4 | 4 | 4 |
| (D) (parts by weight) | 2 | 2 | 2 | 2 | 2 | 1 | 4 |
| Flame retardancy | V-0 | V-0 | V-0 | V-0 | V-0 | V-0 | V-0 |
| Flame retardancy (5V) | 5VA | 5VA | 5VA | 5VA | 5VA | 5VA | 5VA |
| Notched Izod impact strength | 12 | 13 | 15 | 15 | 10 | 13 | 10 |
| Sheet impact strength | 95 | 100 | 120 | 120 | 70 | 100 | 70 |
| Extrusion processability | Non-foamed | Non-foamed | Non-foamed | Non-foamed | Non-foamed | Non-foamed | Non-foamed |
| * wt%: wt% of (C1), (C2), (C3) or (C4) based on 100 wt% of flame retardant mixture (C) | | | | | | | |

Table 2

| | Example | | | | | | | | |
|---|---|---|---|---|---|---|---|---|---|
| | 8 | 9 | 10 | 11 | 12 | 13 | 14 | 15 | 16 |
| (A) (parts by weight) | 100 | 100 | 100 | 100 | 100 | 100 | 100 | 100 | 100 |
| (B) (parts by weight) | 25 | 25 | 25 | 25 | 25 | 25 | 25 | 25 | 25 |
| (C) (parts by weight) | 60 | 60 | 60 | 60 | 60 | 60 | 60 | 60 | 60 |
| (C1) (wt%) | 60 | 45 | 60 | 57 | 50 | 60 | 49 | 57 | 52 |
| (C2) (wt%) | 3 | 10 | 10 | 3 | 10 | 6 | 6 | 6 | 6 |
| (C3) (wt%) | 30 | 40 | 28 | 35 | 35 | 29 | 40 | 35 | 35 |
| (C4) (wt%) | 7 | 5 | 2 | 5 | 5 | 5 | 5 | 2 | 7 |
| (D) (parts by weight) | 2 | 2 | 2 | 2 | 2 | 2 | 2 | 2 | 2 |

(continued)

| | Example | | | | | | | | |
|---|---|---|---|---|---|---|---|---|---|
| | 8 | 9 | 10 | 11 | 12 | 13 | 14 | 15 | 16 |
| Flame retardancy | V-0 | V-0 | V-0 | V-0 | V-0 | V-0 | V-0 | V-0 | V-0 |
| Flame retardancy (5V) | 5VA | 5VA | 5VA | 5VA | 5VA | 5VA | 5VA | 5VA | 5VA |
| Notched Izod impact strength | 15 | 13 | 11 | 15 | 11 | 13 | 11 | 13 | 12 |
| Sheet impact strength | 120 | 100 | 90 | 120 | 90 | 100 | 90 | 100 | 95 |
| Extrusion processability | Non-foamed | Non-foamed | Non-foamed | Non-foamed | Non-foamed | Non-foamed | Non-foamed | Non-foamed | Non-foamed |
| * wt%: wt% of (C1), (C2), (C3) or (C4) based on 100 wt% of flame retardant mixture (C) | | | | | | | | | |

Table 3

| | Comparative Example | | | | | | | |
|---|---|---|---|---|---|---|---|---|
| | 1 | 2 | 3 | 4 | 5 | 6 | 7 | 8 |
| (A) (parts by weight) | 100 | 100 | 100 | 100 | 100 | 100 | 100 | 100 |
| (B) (parts by weight) | 5 | 40 | 25 | 25 | 25 | 25 | 25 | 25 |
| (C) (parts by weight) | 60 | 60 | 35 | 80 | 60 | 60 | 60 | 60 |
| (C1) (wt%) | 55 | 55 | 55 | 55 | 55 | 55 | 55 | 55 |
| (C2) (wt%) | 6 | 6 | 6 | 6 | 6 | 6 | 6 | 6 |
| (C3) (wt%) | 35 | 35 | 35 | 35 | 35 | 35 | 35 | 35 |
| (C4) (wt%) | 4 | 4 | 4 | 4 | 4 | 4 | 4 | 4 |
| (D) (parts by weight) | 2 | 2 | 2 | 2 | 0.5 | 5 | 0 | 0 |
| (E) (parts by weight) | 0 | 0 | 0 | 0 | 0 | 0 | 2 | 4 |
| Flame retardancy | Fail | V-0 | Fail | - | Fail | V-0 | Fail | Fail |
| Flame retardancy (5V) | Fail | 5VA | Fail | - | Fail | 5VA | Fail | Fail |
| Notched Izod impact strength | 11 | 8 | 17 | - | 14 | 8 | 13 | 10 |
| Sheet impact strength | 90 | 55 | 150 | - | 115 | 60 | 100 | 70 |
| Extrusion processability | Non-foamed | Non-foamed | Non-foamed | Foamed | Non-foamed | Non-foamed | Non-foamed | Non-foamed |
| * wt%: wt% of (C1), (C2), (C3) or (C4) based on 100 wt% of flame retardant mixture (C) | | | | | | | | |

## EP 4 206 281 B1

Table 4

| | Comparative Example | | | | | | | |
|---|---|---|---|---|---|---|---|---|
| | 9 | 10 | 11 | 12 | 13 | 14 | 15 | 16 |
| (A) (parts by weight) | 100 | 100 | 100 | 100 | 100 | 100 | 100 | 100 |
| (B) (parts by weight) | 25 | 25 | 25 | 25 | 25 | 25 | 25 | 25 |
| (C) (parts by weight) | 60 | 60 | 60 | 60 | 60 | 60 | 60 | 60 |
| (C1) (wt%) | 43 | 65 | 60 | 50 | 60 | 47 | 57 | 49 |
| (C2) (wt%) | 10 | 3 | 2 | 12 | 10 | 7 | 7 | 7 |
| (C3) (wt%) | 40 | 30 | 35 | 35 | 23 | 43 | 35 | 35 |
| (C4) (wt%) | 7 | 2 | 3 | 3 | 7 | 3 | 1 | 9 |
| (D) (parts by weight) | 2 | 2 | 2 | 2 | 2 | 2 | 2 | 2 |
| Flame retardancy | Fail | - | Fail | - | Fail | - | Fail | - |
| Flame retardancy (5V) | Fail | - | Fail | - | Fail | - | Fail | - |
| Notched Izod impact strength | 15 | - | 12 | - | 13 | - | 12 | - |
| Sheet impact strength | 120 | - | 95 | - | 100 | - | 95 | - |
| Extrusion processability | Non-foamed | Foamed | Non-foamed | Foamed | Non-foamed | Foamed | Non-foamed | Foamed |
| * wt%: wt% of (C1), (C2), (C3) or (C4) based on 100 wt% of flame retardant mixture (C) | | | | | | | | |

From the above results, it could be seen that the thermoplastic resin compositions of the present invention had good properties in terms of flame retardancy, impact resistance, extrudability (extrusion processability).

Conversely, it could be seen that the thermoplastic resin composition prepared using an insufficient amount of the polyester resin (Comparative Example 1) suffered from deterioration in flame retardancy; and the thermoplastic resin composition prepared using an excess of the polyester resin (Comparative Example 2) suffered from deterioration in impact resistance. It could be seen that the thermoplastic resin composition prepared using an insufficient amount of the flame retardant mixture (Comparative Example 3) suffered from deterioration in flame retardancy; and the thermoplastic resin composition prepared using an excess of the flame retardant mixture (Comparative Example 4) suffered from deterioration in extrudability (extrusion stability). It could be seen that the thermoplastic resin composition prepared using an insufficient amount of zeolite (Comparative Example 5) suffered from deterioration in flame retardancy; and the thermoplastic resin composition prepared using an excess of zeolite (Comparative Example 6) suffered from deterioration in impact resistance. It could be seen that the thermoplastic resin compositions prepared using MgO instead of zeolite (Comparative Examples 7 and 8) suffered from deterioration in flame retardancy.

In addition, it could be seen that the thermoplastic resin composition prepared using an insufficient amount of piperazine pyrophosphate (C1) (Comparative Example 9) suffered from deterioration in flame retardancy; the thermoplastic resin composition prepared using an excess of piperazine pyrophosphate (C1) (Comparative Example 10) suffered from deterioration in extrudability; the thermoplastic resin composition prepared using an insufficient amount of melamine phosphate (C2) (Comparative Example 11) suffered from deterioration in flame retardancy; and the thermoplastic resin composition prepared using an excess of melamine phosphate (C2) (Comparative Example 12) suffered from deterioration in extrudability. It could be seen that the thermoplastic resin composition prepared using an insufficient amount of melamine pyrophosphate (C3) (Comparative Example 13) suffered from deterioration in flame retardancy; the thermoplastic resin composition prepared using an excess of melamine pyrophosphate (C3) (Comparative Example 14) suffered from deterioration in extrudability; the thermoplastic resin composition prepared using an insufficient amount of zinc oxide (C4) (Comparative Example 15) suffered from deterioration in flame retardancy; and the thermoplastic resin composition prepared using an excess of zinc oxide (C4) (Comparative Example 16) suffered from deterioration in extrudability.

**Claims**

1. A thermoplastic resin composition comprising:

   100 parts by weight of a rubber-modified aromatic vinyl copolymer resin;
   7 parts by weight to 38 parts by weight of a polyester resin;
   37 parts by weight to 78 parts by weight of a flame retardant mixture; and
   0.7 parts by weight to 4.5 parts by weight of zeolite,
   wherein the flame retardant mixture comprises 45 wt% to 60 wt% of piperazine pyrophosphate, 3 wt% to 10 wt% of melamine phosphate, 25 wt% to 40 wt% of melamine pyrophosphate, and 2 wt% to 7 wt% of zinc oxide having an average particle diameter of 0.2 $\mu$m to 3 $\mu$m as measured in a single particle state (not forming a secondary particle through agglomeration of particles) using a particle size analyzer according to the description and a BET specific surface area of 1 m$^2$/g to 10 m$^2$/g as measured by a nitrogen gas adsorption method using a BET analyzer according to the description.

2. The thermoplastic resin composition according to claim 1, wherein the rubber-modified aromatic vinyl copolymer resin comprises a rubber-modified vinyl graft copolymer and an aromatic vinyl copolymer resin.

3. The thermoplastic resin composition according to claim 2, wherein the rubber-modified vinyl graft copolymer is prepared through graft polymerization of a monomer mixture comprising an aromatic vinyl monomer and a vinyl cyanide monomer to a rubber polymer.

4. The thermoplastic resin composition according to any one of claims 1 to 3, wherein the polyester resin comprises at least one of polyethylene terephthalate (PET), polybutylene terephthalate (PBT), polyethylene naphthalate (PEN), polytrimethylene terephthalate (PTT), and polycyclohexylenedimethylene terephthalate (PCT).

5. The thermoplastic resin composition according to any one of claims 1 to 4, wherein the piperazine pyrophosphate and the melamine phosphate are present in a weight ratio of 1:0.05 to 1:0.5.

6. The thermoplastic resin composition according to any one of claims 1 to 5, wherein the piperazine pyrophosphate and the melamine pyrophosphate are present in a weight ratio of 1:0.4 to 1:0.9.

7. The thermoplastic resin composition according to any one of claims 1 to 6, wherein the piperazine pyrophosphate and the zinc oxide are present in a weight ratio of 1:0.015 to 1:0.16.

8. The thermoplastic resin composition according to any one of claims 1 to 7, wherein the thermoplastic resin composition has a flame retardancy of V-2 or higher, as measured on a 2 mm thick specimen by a UL-94 vertical test method, and a flame retardancy of 5VA, as measured on a 2 mm thick specimen by a UL-94 5V burning test method.

9. The thermoplastic resin composition according to any one of claims 1 to 8, wherein the thermoplastic resin composition has a notched Izod impact strength of 9 kgf·cm/cm to 17 kgf·cm/cm, as measured on a 1/8" thick specimen in accordance with ASTM D256.

10. The thermoplastic resin composition according to any one of claims 1 to 9, wherein the thermoplastic resin composition has a dart drop height of 65 cm to 130 cm, at which cracks are generated on a 3.2 mm thick specimen upon dropping a 2 kg dart onto the specimen in accordance with a ball drop test method.

11. A molded product produced from the thermoplastic resin composition according to any one of claims 1 to 10.

**Patentansprüche**

1. Thermoplastische Harzzusammensetzung, umfassend:

100 Gewichtsteile eines kautschukmodifizierten aromatischen Vinylcopolymerharzes;

7 Gewichtsteile bis 38 Gewichtsteile eines Polyesterharzes;

37 Gewichtsteile bis 78 Gewichtsteile einer Flammschutzmittelmischung; und

0,7 Gewichtsteile bis 4,5 Gewichtsteile Zeolith;

wobei die Flammschutzmittelmischung 45 Gew.-% bis 60 Gew.-% Piperazinpyrophosphat, 3 Gew.-% bis 10 Gew.-% Melaminphosphat, 25 Gew.-% bis 40 Gew.-% Melaminpyrophosphat und 2 Gew.-% bis 7 Gew.-% Zinkoxid mit einem durchschnittlichen Partikeldurchmesser von 0,2 $\mu$m bis 3 $\mu$m, gemessen in einem Einzelpartikelzustand (keine Bildung eines Sekundärpartikels durch Agglomeration von Partikeln) unter Verwendung eines Partikelgrößenanalysators gemäß der Beschreibung, und einer BETspezifischen Oberfläche von 1 $m^2$/g bis 10 $m^2$/g, gemessen durch ein Stickstoffgasadsorptionsverfahren unter Verwendung eines BET-Analysators gemäß der Beschreibung, umfasst.

2. Thermoplastische Harzzusammensetzung nach Anspruch 1, wobei das kautschukmodifizierte aromatische Vinylcopolymerharz ein kautschukmodifiziertes Vinylpfropfcopolymer und ein aromatisches Vinylcopolymerharz umfasst.

3. Thermoplastische Harzzusammensetzung nach Anspruch 2, wobei das kautschukmodifizierte Vinylpfropfcopolymer durch Pfropfcopolymerisation einer Monomermischung, die ein aromatisches Vinylmonomer und ein Vinylcyanidmonomer umfasst, zu einem Kautschukpolymer hergestellt wird.

4. Thermoplastische Harzzusammensetzung nach einem der Ansprüche 1 bis 3, wobei das Polyesterharz mindestens eines aus Polyethylenterephthalat (PET), Polybutylenterephthalat (PBT), Polyethylennaphthalat (PEN), Polytrimethylenterephthalat (PTT) und Polycyclohexylenterephthalat (PCT) umfasst.

5. Thermoplastische Harzzusammensetzung nach einem der Ansprüche 1 bis 4, wobei das Piperazinpyrophosphat und das Melaminphosphat in einem Gewichtsverhältnis von etwa 1:0,05 bis etwa 1:0,5 vorhanden sind.

6. Thermoplastische Harzzusammensetzung nach einem der Ansprüche 1 bis 5, wobei das Piperazinpyrophosphat und das Melaminphosphat in einem Gewichtsverhältnis von 1:0,4 bis 1:0,9 vorhanden sind.

7. Thermoplastische Harzzusammensetzung nach einem der Ansprüche 1 bis 6, wobei das Piperazinpyrophosphat und das Zinkoxid in einem Gewichtsverhältnis von 1:0,015 bis 1:0,16 vorhanden sind.

8. Thermoplastische Harzzusammensetzung nach einem der Ansprüche 1 bis 7, wobei die thermoplastische Harzzusammensetzung eine Flammhemmung von V-2 oder höher, gemessen an einer 2 mm dicken Probe nach einem vertikalen UL-94-Prüfverfahren, und eine Flammhemmung von 5VA, gemessen an einer 2 mm dicken Probe nach einem UL-94 5V-Brennprüfverfahren, aufweist.

9. Thermoplastische Harzzusammensetzung nach einem der Ansprüche 1 bis 8, wobei die thermoplastische Harzzusammensetzung eine Kerbschlagzähigkeit nach Izod von etwa 9 kgf·cm/cm bis etwa 17 kgf·cm/cm aufweist, gemessen an einer 1/8" dicken Probe gemäß ASTM D256.

10. Thermoplastische Harzzusammensetzung nach einem der Ansprüche 1 bis 9, wobei die thermoplastische Harzzusammensetzung eine Pfeilfallhöhe von 65 cm bis 130 cm aufweist, bei der Risse an einer 3,2 mm dicken Probe entstehen, wenn ein 2 kg schwerer Pfeil gemäß einem Kugelfalltestverfahren auf die Probe fallen gelassen wird.

11. Formartikel, der aus der thermoplastischen Harzzusammensetzung nach einem der Ansprüche 1 bis 10 hergestellt ist.

**Revendications**

1. Composition de résine thermoplastique comprenant :

100 parties en poids d'une résine de copolymère vinylique aromatique modifié par du caoutchouc ;

7 parties en poids à 38 parties en poids d'une résine polyester ;

37 parties en poids à 78 parties en poids d'un mélange ignifuge ; et

0,7 partie en poids à 4,5 parties en poids de zéolite,

dans laquelle le mélange ignifuge comprend 45% en poids à 60% en poids de pyrophosphate de pipérazine, 3% en poids à 10% en poids de phosphate de mélamine, 25% en poids à 40% en poids de pyrophosphate de mélamine, et 2% en poids à 7% en poids d'oxyde de zinc ayant un diamètre moyen de particules allant de 0,2 μm à 3 μm tel que mesuré à l'état de particule unique (ne formant pas de particule secondaire par agglomération de particules) en utilisant un analyseur de taille de particules conformément à la description, et une surface spécifique BET de 1 m²/g à 10 m²/g telle que mesurée par une méthode d'adsorption d'azote gazeux en utilisant un analyseur **BET** conformément à la description.

2. Composition de résine thermoplastique selon la revendication 1, dans laquelle la résine de copolymère vinylique aromatique modifié par du caoutchouc comprend un copolymère greffé vinylique modifié par du caoutchouc et une résine de copolymère vinylique aromatique.

3. Composition de résine thermoplastique selon la revendication 2, dans laquelle le copolymère greffé vinylique modifié par du caoutchouc est préparé par polymérisation par greffage d'un mélange de monomères comprenant un monomère vinylique aromatique et un monomère de cyanure de vinyle sur un polymère de caoutchouc.

4. Composition de résine thermoplastique selon l'une quelconque des revendications 1 à 3, dans laquelle la résine polyester comprend au moins l'un parmi le polyéthylène téréphtalate (PET), le polybutylène téréphtalate (PBT), le polyéthylène naphtalate (PEN), le polytriméthylène téréphtalate (PTT) et le polycyclohexylènediméthylène téréphtalate (PCT).

5. Composition de résine thermoplastique selon l'une quelconque des revendications 1 à 4, dans laquelle le pyrophosphate de pipérazine et le phosphate de mélamine sont présents dans un rapport en poids de 1:0,05 à 1:0,5.

6. Composition de résine thermoplastique selon l'une quelconque des revendications 1 à 5, dans laquelle le pyrophosphate de pipérazine et le pyrophosphate de mélamine sont présents dans un rapport en poids de 1:0,4 à 1:0,9.

7. Composition de résine thermoplastique selon l'une quelconque des revendications 1 à 6, dans laquelle le pyrophosphate de pipérazine et l'oxyde de zinc sont présents dans un rapport en poids de 1:0,015 à 1:0,16.

8. Composition de résine thermoplastique selon l'une quelconque des revendications 1 à 7, dans laquelle la composition de résine thermoplastique a une ininflammabilité supérieure ou égale à V-2, telle que mesurée sur un spécimen de 2 mm d'épaisseur par une méthode d'essai verticale UL-94, et une ininflammabilité de 5VA, telle que mesurée sur un spécimen de 2 mm d'épaisseur par une méthode d'essai de combustion UL-94 5V.

9. Composition de résine thermoplastique selon l'une quelconque des revendications 1 à 8, dans laquelle la composition de résine thermoplastique a une résistance au choc Izod sur barreau entaillé de 9 kgfcm/cm à 17 kgf·cm/cm, telle que mesurée sur un spécimen de 1/8" d'épaisseur conformément à la norme ASTM D256.

10. Composition de résine thermoplastique selon l'une quelconque des revendications 1 à 9, dans laquelle la composition de résine thermoplastique a une hauteur de chute de fléchette de 65 cm à 130 cm, à laquelle des fissures sont générées sur un spécimen de 3,2 mm d'épaisseur lors de la chute d'une fléchette de 2 kg sur le spécimen conformément à une méthode d'essai de chute de balle.

11. Produit moulé fabriqué à partir de la composition de résine thermoplastique selon l'une quelconque des revendications 1 à 10.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020100068954

- KR 20200082276 A

**Non-patent literature cited in the description**

- *CHEMICAL ABSTRACTS*, 66034-17-1